(19) Europäisches Patentamt
European Patent Office
Office européen des brevets

(11) Numéro de publication: **0 058 618**
**A1**

(12) **DEMANDE DE BREVET EUROPEEN**

(21) Numéro de dépôt: 82400253.9

(22) Date de dépôt: 12.02.82

(51) Int. Cl.$^3$: C 04 B 35/64
C 04 B 35/00, C 04 B 35/56
C 01 B 35/10

(30) Priorité: 16.02.81 FR 8102992

(43) Date de publication de la demande:
25.08.82 Bulletin 82/34

(84) Etats contractants désignés:
AT BE CH DE GB IT LI LU NL SE

(71) Demandeur: ASSOCIATION POUR LA RECHERCHE ET LE DEVELOPPEMENT DES METHODES ET PROCESSUS INDUSTRIELS (ARMINES)
60, Boulevard Saint-Michel
F-75272 Paris Cédex 06(FR)

(72) Inventeur: Thevenot, François
3, rue Francisque Voytier
42100 Saint-Etienne Loire(FR)

(72) Inventeur: Brodhag, Christian
6 Rue Virgile
F-42100 Saint-Etienne Loire(FR)

(72) Inventeur: Bouchacourt, Michel
2, Square Cahenmichel Veneux les Sablons
F-77250 Moret sur Loing Seine-et-Marne(FR)

(74) Mandataire: Chevallier, Robert
Cabinet BOETTCHER 23, rue La Boétie
F-75008 Paris(FR)

(54) **Procédé et dispositif de fabrication par frittage de pièces riches en bore et pièces ainsi obtenues.**

(57) Procédé et dispositif de fabrication par frittage de pièces riches en bore et pièces ainsi obtenues.

L'invention concerne un procédé et un dispositif de fabrication par frittage sous charge de pièces riches en bore dans une matrice de graphite et des pièces riches en bore. On introduit la poudre à fritter dans une matrice (2) en graphite dont les parois sont faites ou recouvertes de façon totalement étanche d'un revêtement (11, 12) de nitrure de bore hexagonal ou amorphe, on applique dans la matrice (2) une pression de l'ordre de 80 à 1000 bars et on augmente progressivement la température jusqu'à un palier de 1200 à 2100°C qu'on maintient pendant 15 à 120 mn de 300 à 400 bars avant de refroidir et démouler la pièce.

./...

EP 0 058 618 A1

Croydon Printing Company Ltd.

Fig. 1

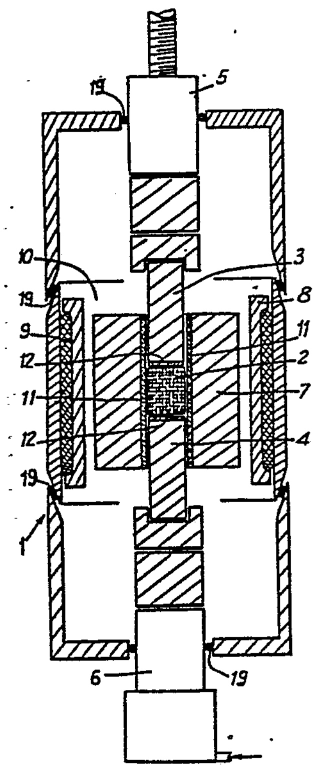

Procédé et dispositif de fabrication par frittage de pièces riches en bore et pièces ainsi obtenues.

L'invention a pour objet un procédé de fabrication par frittage sous charge dans une matrice en graphite de pièces riches en bore; elle couvre aussi un dispositif de mise en oeuvre de ce procédé ainsi que les pièces frittées obtenues.

Le bore et ses composés ont des applications très variées, notamment dans des industries de pointe et particulièrement dans le domaine de l'énergie nucléaire. L'isotope de masse 10 du bore naturel (bore 10 : 19,82%, bore 11 : 80,18%) en % atomique est en effet l'un des matériaux les plus utilisés comme élément neutrophage dans les réacteurs nucléaires. Pour cet usage il est souhaitable d'employer du bore enrichi en bore 10 sous forme d'alliages, de dispersion ou de céramique, en raison de la forte section de capture de neutrons de l'isotope 10 ($^{10}B$ : 4000 barns et $^{11}B$ : 0,05 pour des neutrons de 0,025eV), de son excellente inertie chimique, de sa faible radioactivité résiduelle, du fait qu'après irradiation par les neutrons, le bore 10 n'a pas de descendant radioactif.

$$^{10}_{5}B + ^{1}_{0}n \longrightarrow ^{7}_{3}Li + ^{4}_{2}He + 2,79\ MeV$$

Ce dernier avantage est important car il réduit le prix de la mise en oeuvre du matériau et surtout de la matière première, grâce au recyclage possible de la fraction non consommée après irradiation.

Toutefois, la production de pièces en bore pur de densité élevée ou de pièces riches en bore pose un problème qui n'a pas été résolu jusqu'à présent.

Le frittage du bore n'a pas permis, d'après des études récentes, d'obtenir des produits denses de bonne qualité; voir : GRESKOVICH C., ROSOLOWSKI J.H., J. Am. Ceram. Soc 59 7-8 (1976) 336-343, GERMAN R.M. MAR R.W., HASTINGS J.C., Am. Ceram. soc. Bull. 54 2 (1975) 178-181.

L'utilisation d'activants n'améliore pas la densification. Pour des raisons de pureté, liées aux propriétés physico-chimiques et nucléaires de la phase,

il est particulièrement intéressant de procéder à la mise en forme du bore par compression à chaud. Cette méthode permet aussi, par ailleurs, l'obtention de produits compacts de densité élevée pour toutes les phases à haute teneur en bore ($B_4C$ à $B_{10,5}C$, $B_6O$) ainsi que des composites $B+B_{10,5}C$ et $B+B_6O$) et ceci sans adjonction d'éléments d'activation de frittage et pour toute composition isotopique des produits de départ. On pourrait envisager de maîtriser la microstructure du produit fritté, ainsi que préparer des formes simples directement utilisables (cylindres, plaques, tubes ...). Cependant, toutes les tentatives connues de compression à chaud de bore ont été des échecs.

L'obtention d'échantillons massifs d'un sous--oxyde du bore n'est possible que sous pression à froid avec de fortes pressions de l'ordre de 110 kbars, ou à chaud vers 1800-2000°C sous une plus faible pression, de l'ordre de 400 bars. La littérature ne cite que des références sur le frittage réactif du sous-oxyde; voir notamment RHODES W.H. DELAI A.J., Tech. Rept. AFML-TR-72-159 AD 751980 19 p (1972) et PETRAK D.R. RUH R., GOOSEY B.F., NBS Sepcial Pub. 364 (1972) 605-611. Il est préparé directement in situ, par réaction du bore sur l'anhydride borique; cette réaction a lieu vers 1100°C, c'est-à-dire bien en dessous de la température de début du frittage de 1600°C. Il ne s'agit donc pas à proprement parler de frittage réactif puisque la réaction et le frittage ont lieu à des températures très différentes. La programmation de la température dans la zone de fusion de l'anhydride borique et de la réaction jouent un rôle important sur la phase obtenue, sur sa granulométrie et donc sur le frittage lui-même. En effet, vers 290°C le $B_2O_3$ fond et le mélange diminue assez rapidement de volume. Comme les grosses particules de l'anhydride peuvent laisser une cavité importante dans l'échantillon final, il est important d'avoir des particules de faible taille. La vitesse de montée en température semble jouer un rôle important sur la tenue et la texture des grosses pièces; une vitesse de 5°C/mn, pendant l'étape de réaction, est un maximum pour des échantillons de diamètre 75 mm selon RHODES déjà cité.

Le frittage sous charge de carbure de bore a été l'objet de plusieurs études, mais rarement de façon systématique par rapport aux différents paramètres : granulométrie des poudres, température, pression. Mais les différents auteurs n'ont pas réussi à s'affranchir de la diffusion du carbone et donc n'ont pas pu préparer d'échantillons riches en bore. L'étude bibliographique de ces préparations a été publiée dans THEVENOT F., BOUCHACOURT M., l'Industrie Céramique 732 10 (1979) 655-661.

L'exposé précédent montre qu'on ne sait pas obtenir industriellement de pièces denses frittées à chaud du bore et de ses composés riches en bore cités.

On doit cependant faire état du brevet US numéro 3 816 586, dans lequel GOOSEY a proposé de fabriquer des pièces en sous-oxyde de bore $B_6O$ par réaction de bore et d'oxyde de bore $B_2O_3$. Le procédé de GOOSEY comprend un grand nombre d'étapes, comportant notamment : le pressage à froid d'une ébauche à l'intérieur d'une enveloppe en tantale ; le recouvrement des faces extrêmes de l'ébauche d'un mélange de nitrure de bore et d'oxyde de bore par une compression à chaud: la mise en compression de l'ébauche recouverte dans une zone enveloppée de tantale pendant qu'on fait monter la température jusqu'à la fusion de l'oxyde de bore, après quoi on fait cesser la pression; la mise en pression de l'ébauche refroidie dans une matrice de graphite recouverte d'une couche de nitrure de bore qui est elle-même retenue par une feuille de tantale en vue du traitement final par compression et élévation de la température.

Toutes ces opérations sont compliquées et ne sont applicables qu'à l'obtention du sous-oxyde de bore $B_6O$. Elles ont pour objet d'éviter la contamination du sous-oxyde de bore par le carbone de la matrice, matériau nécessité par les conditions de températures de la phase finale de frittage.

On doit mentionner aussi les travaux publiés par CHAMPAGNE et ANGERS dans Journal of the American Ceramic Society (Mar-Apr. 79) qui ont protégé la poudre frittée vis-à-vis du graphite à l'aide de plaques en nitrure de

bore de 1,5 mm d'épaisseur. Cette barrière peu efficace contre la diffusion du carbone n'a pas permis d'obtenir d'autre carbure de bore que le $B_4C$.

Le but principal de l'invention est de parvenir, à l'aide d'une matrice de graphite, à des pièces frittées riches en bore et à faible porosité, par exemple en carbure de bore $B_nC$, n étant compris entre 4 et 10,5, en sous-oxyde $B_6O$ et en leurs mélanges en toutes proportions.

Les caractéristiques de ces produits leur permettront de nombreuses applications non seulement dans l'industrie nucléaire, mais dans les industries mécaniques, les abrasifs, les outils de coupe, les filières, etc.... En effet, le sous-oxyde de bore et le carbure de bore sont tout particulièrement des composés de grande dureté.

Le but de l'invention est atteint par un procédé de fabrication par frittage à chaud sous charge, sous vide ou sous atmosphère neutre, dans une matrice en graphite et sous barrière chimique, de pièces brutes, riches en bore, à partir d'un matériau à l'état de poudre du groupe constitué par le bore, les carbures de bore $B_nC$, n étant compris entre 4 et 10,5, le sous-oxyde de bore et leurs mélanges en toutes proportions, grâce au fait que l'on introduit la poudre dans une matrice dont les parois de chambre et les parois de pistons sont recouvertes de façon totalement étanche de nitrure de bore hexagonal ou amorphe.

Selon que l'on désire des pièces en sous-oxyde de bore ou en carbure de bore, on opère à des conditions qui sont, pour la pression de l'ordre de 100 à 1000 bars, qui vont pour la température jusqu'à un palier de 1200 à 2200°C, de préférence avec une vitesse de montée de l'ordre de 5 à 50°C/min, et on maintient la température à ce palier pendant 15 à 120 minutes.

Ainsi, contrairement à GOOSEY, on procède en une seule succession opératoire et par une mise unique en pression et en température d'une poudre à fritter ayant la composition du produit final sans passer par une ébauche. En outre, le nouveau procédé ne s'applique pas seulement à

l'obtention du sous-oxyde de bore, mais à un grand nombre de composés ou de mélanges à base de bore, y compris le bore lui-même, grâce aux moyens nouveaux de mise en oeuvre de la barrière chimique constituée de nitrure de bore.

C'est ainsi que pour obtenir une pièce de sous--oxyde de bore $B_6O$ on constituera un mélange de bore et d'anhydride borique $B_2O_3$ dans les proportions de la réaction ($16\ B + B_2O_3 \longrightarrow 3B_6O$) et on limitera à 50°C/min. la vitesse de montée en température, au moins dans la zone de volatilisation et de réaction de $B_2O_3$ soit aux environs de 1200°C, le palier de 300 à 400 bars étant maintenu pendant 20 à 60 mn de 1850 à 2000°C.

Pour obtenir une pièce en carbure de bore $B_nC$ avec n supérieur à 4, on constituera un mélange de bore et de carbone ou de carbure de bore $B_4C$, ou de la poudre préalliée, de la composition désirée, et on maintiendra la pression à environ 300 à 400 bars à un palier de température d'environ 2000 à 2100°C pendant environ 30 à 60 minutes.

Pour obtenir une pièce composite on constituera un mélange de bore et de $B_{10,5}C$ ou $B_6O$ ou un mélange des constituants bore, carbone ou carbure de bore $B_4C$, ou anhydride borique, contenant du bore en excès par rapport aux compositions $B_{10,5}C$ ou $B_6O$ ou un mélange de carbure de bore et sous-oxyde.

Lorsque le matériau de départ sera du bore pur, on comprimera la poudre de bore entre 1700 et 1900°C sous une pression de 300 à 400 bars, le palier étant maintenu pendant 20 à 60 min.

Pour obtenir une pièce en sous-oxyde de bore, on pourra le préparer en poudre par réduction d'un oxyde $M_xO_y$ d'un des métaux suivants : Mg, Sn, Ga ou Cd, par du bore à une température de 1200 à 1600°C pendant 2 à 12 heures sous argon, le rapport bore/oxygène de l'oxyde étant égal à 6 en teneur atomique. La poudre de sous-oxyde de bore ainsi obtenue sera comprimée à une température comprise entre 1700 et 2000°C sous une pression de 300 à 400 bars et le palier sera maintenu pendant 20 à 60 min.

Selon l'invention, les faces de la chambre de la matrice et des pistons sont recouvertes de nitrure de bore compact et étanche rapporté.

Par exemple, les faces de la chambre de la matrice et des pistons en graphite sont recouvertes de nitrure de bore par un procédé choisi dans le groupe constitué par l'une quelconque des méthodes de dépôt suivantes : dépôt chimique en phase vapeur, projection au plasma, pulvérisation cathodique, dépôt ionique ou par radiofréquence et dérivés.

Une autre manière selon l'invention de réaliser une barrière efficace de protection consiste à comprimer à chaud de la poudre de nitrure de bore contre les faces en graphite, jusqu'à la rendre compacte et résistante; à cet effet on peut se servir, par exemple, d'un noyau de compression en graphite. On chauffe cette poudre à 2100°C à une pression de 200 bars pendant 10 minutes. De préférence, on adopte une épaisseur à l'état comprimé comprise entre 1 et 4 mm. On obtient ainsi une barrière de protection compacte d'une densité de 1,70, soit 75% de la densité théorique.

En outre, selon l'invention, en plus du revêtement des parois de la matrice, il est avantageux d'interposer de la poudre de nitrure de bore entre les faces des pistons et la poudre à comprimer parce que la poudre de BN comprimée assure une meilleure étanchéité.

Dans le cas général, on introduit la poudre ou le mélange à fritter directement dans la matrice revêtue de nitrure de bore. Mais il est également possible, pour des températures de frittage inférieures à 2000°C (cas du bore et du sous-oxyde), que la poudre ou le mélange soient emballés dans une feuille de tantale; cet emballage est placé à l'intérieur de la couche de nitrure de bore. Il peut être préféré d'interposer entre le nitrure de bore et la paroi de graphite, une feuille de papier graphité, qui facilite le démoulage.

Il est avantageux, pour la fabrication de pièces complexes, d'utiliser des pistons de section non circulaire avec des sections perpendiculaires à l'axe, de forme quelconque, ou que les parties creuses et/ou évidées de la pièce

reçoivent préalablement un noyau en, ou revêtu de, nitrure de bore massif.

Le procédé de l'invention se met en oeuvre à l'aide d'un dispositif comprenant une matrice à compression axiale réglable logée dans un four ou un dispositif de chauffage à température réglable, dans lequel les faces internes de la matrice sont faites ou recouvertes de façon totalement étanche de nitrure de bore hexagonal ou amorphe, par exemple en nitrure de bore fritté ou en carbone revêtu de nitrure de bore par l'une des méthodes de dépôt telle que le dépôt chimique en phase vapeur, la projection au plasma, la pulvérisation cathodique et le dépôt ionique ou par radiofréquence et dérivés.

L'invention concerne, enfin, des pièces riches en bore constituées par un matériau du groupe constitué par le bore, les carbures de bore $B_nC$, n étant compris entre 4 et 10,5, le sous-oxyde de bore ou leurs mélanges en toutes proportions, leur porosité étant comprise entre 40 et 0%, ainsi que des pièces brutes constituées par un composite de bore et de carbure de bore $B_{10,5}C$ ou de sous-oxyde de bore dans la proportion de 1 à 0 partie de bore pour 0 à 1 partie de carbure de bore ou de sous-oxyde de bore, leur porosité étant comprise entre 40 et 0%.

D'autres caractéristiques et avantages de l'invention ressortiront de la description, qui sera donnée ci-après uniquement à titre d'exemples, de modes de réalisation de l'invention. On se reportera à cet effet aux dessins annexés et aux exemples d'application. Dans les dessins annexés :

- la figure 1 est une vue en coupe verticale axiale schématique d'une matrice pour la mise en oeuvre de l'invention,
- la figure 2 est une vue de détail à plus grande échelle de la chambre et des pistons de la matrice de la figure 1 selon un mode de réalisation préféré,
- la figure 3 est une variante de réalisation de la chambre de la figure 2.

La presse à chaud 1 est constituée par une matrice 7 comportant une chambre de compression 2, dans l'axe des

pistons opposés 3 et 4, d'une presse à un ou deux vérins 5 et 6 pneumatiques ou hydrauliques repoussant les pistons dans la chambre 2 pour y faire régner une pression de 100 à 1000 bars sur une pièce 20 à fritter à partir de poudre. La chambre 2 est au centre d'une matrice flottante en graphite 7 et un chauffage par résistor en graphite 8, entouré par une chemise 9 d'isolation thermique, permet d'y atteindre des températures voisines de 2500°C; le réglage de la température se fait ou par un rhéostat qui détermine le voltage d'attaque du résistor 8 ou par un système de thyristor, et une programmation régulée de montée en température qui permet une meilleure reproductibilité des opérations. L'atmosphère de l'enceinte 10 à joints de vide 19 contenant la matrice 7, les pistons et le résistor, peut être ou bien un vide primaire (environ $5.10^{-1}$ torr), ou bien une atmosphère protectrice comme l'argon. En opérant sous vide on peut éliminer des gaz ou des produits volatils, mais au-delà de 2000°C il faut utiliser une atmosphère protectrice pour limiter le phénomène de sublimation du résistor en graphite 8, c'est-à-dire son vieillissement. Il est possible d'utiliser une presse ayant un autre moyen de chauffage, comme l'induction.

Les conditions nécessaires au frittage sous charge du bore et des borures (température de l'ordre de 1550°C - 2550°C, pression de l'ordre de 100-1000 bars) imposent l'utilisation de matrices et de pistons en graphite. Ceci pose le problème important de la contamination de l'échantillon par le graphite. C'est pourquoi, selon le mode de réalisation de la figure 2, les parois 11 de la chambre 2, c'est-à-dire de la matrice 7, et les parois actives 12 des pistons 3 et 4 sont faites ou recouvertes de façon totalement étanche de nitrure de bore hexagonal ou amorphe.

Selon une variante représentée à la figure 2, les parois 11 et 12 de la chambre 2 en graphite et des pistons 3 et 4 en graphite sont revêtues de nitrure de bore hexagonal 13 fritté et comprimé à chaud directement sur un support en graphite servant de noyau réservant la place de la poudre 20 à fritter ensuite, les pistons 3, 4 étant aptes à comprimer aussi la couche annulaire 13 de BN.

Dans le cas de la compression d'un produit autre que le sous-oxyde, pour que le revêtement en nitrure de bore ait la plus faible teneur possible en oxygène, on s'est abstenu d'utiliser l'anhydride borique comme adjuvant. Un revêtement obtenu par compression à chaud a une structure lamellaire en plaquettes orientées perpendiculairement à la compression exercée au cours de sa constitution et au cours du frittage sous charge, ce qui présente l'inconvénient d'une durée de vie relativement courte.

Cet inconvénient peut être supprimé selon un autre mode d'obtention de la variante de la figure 2, en utilisant une barrière de nitrure de bore obtenue en phase vapeur. On peut alors obtenir un nitrure de bore adhérent au graphite, dense et pur (moins de 30 ppm d'impuretés). On peut ainsi obtenir une orientation préférentielle des lamelles, c'est-à-dire un nitrure de bore anisotrope, les lamelles étant orientées parallèlement à l'axe de la compression, ce qui a pour effet de faciliter le glissement de l'échantillon le long des parois (lors de la compression et surtout du démoulage). On peut ainsi allonger considérablement la durée de vie du dépôt. On peut également obtenir la couche 13 par dépôt par projection de plasma, la pulvérisation cathodique, le dépôt ionique et par radiofréquence ou procédés dérivés.

Dans tous les cas, il paraît plus intéressant d'utiliser pour le revêtement des pistons de la poudre de nitrure de bore qui s'ajuste mieux que du nitrure de bore massif et offre une plus grande étanchéité.

Selon une variante représentée à la figure 3 on a utilisé une enveloppe 14 métallique de tantale pour contenir la poudre à fritter en pièce 20. Cette enveloppe 14 se présente sous la forme d'une feuille de faible épaisseur (0,1 mm ou moins) roulée et placée dans une chambre cylindrique 2, la poudre 20 y est placée et comprimée à froid, les faces du cylindre ainsi formé sont fermées par des rondelles du même métal 16, les bords de la face cylindrique sont repliés de façon à retenir le tout. On obtient ainsi une enveloppe cylindrique étanche, celle-ci peut être soudée point par point pour garder sa forme, mais plus simplement

les bords repliés tiennent l'ensemble.

Ce cylindre est aisément manipulable, il est placé dans la matrice revêtue de papier au graphite 17 et de la poudre de nitrure de bore 15 est bourrée entre les parois sur une épaisseur de 1 mm. Des pastilles de papier graphité 18 sont placées entre le nitrure de bore et les poinçons 3 et 4. Le frittage de la couche extérieure de nitrure de bore s'opère en même temps que celui de l'échantillon. On peut ainsi protéger le bore et les composés traités, de toute pollution par le carbone.

Comme dans tous les cas où on utilise une enveloppe métallique, celle-ci se plisse lors de la compression, il convient d'opérer une rectification cylindrique pour éliminer la couche extérieure de borure de tantale et lui donner un bon état de surface. La perte en produit est relativement faible dans cette opération, inférieure à 30% pour une pastille de diamètre 15 mm, et moins sur les plus gros diamètres. On remarquera que cette dernière variante s'apparente en très simplifié au procédé Goosey dont elle représente un perfectionnement substantiel et qu'elle ne se limite pas à l'obtention de sous-oxyde de bore.

On va maintenant donner, sous forme de tableau, des exemples de mise en oeuvre du procédé selon l'invention, d'où on déduit que les moyens de l'invention permettent d'obtenir les résultats annoncés et d'obtenir des pièces ayant les propriétés annoncées. Ce tableau donne pour chacun des exemples les caractéristiques du produit de départ, les conditions de pression et de vitesse de montée en température, la nature de l'atmosphère de l'enceinte, les conditions de pression, température et durée en minutes du traitement en palier et les caractéristiques des produits obtenus, à savoir la nature de la phase, la porosité finale et, pour les exemples 1, 4, 6, 7, 8 et 10, l'analyse élémentaire. Le carbure $B_4C$, utilisé dans les exemples 7 à 11, contient des traces dosées de carbone libre.

| Exemples n°s | produits de départ | montée en température | | atmosphère de l'enceinte | palier | | | produit final | | |
|---|---|---|---|---|---|---|---|---|---|---|
| | | pression bars | vitesse de montée | | pression bars | température °C (°K) | durée mn | phase | porosité finale | analyse % en masse |
| 1 | bore amorphe : 6,23 g | 290 | 20°C/mn | vide | 400 | 1740°C (2013°K) | 40 | bore rhomboéd. beta | 14 % | + de 99% B |
| 2 | bore amorphe : 5,63 g | 195 | 24°C/mn | vide | 400 | 1850°C (2123°K) | 20 | bore rhomboéd. beta | 1 % | |
| 3 | bore beta, 99,5%, 325 mesh : 5,59 g | 200 | 20°C/mn | vide | 400 | 1700°C (1973°K) | 20 | bore rhomboéd. beta | 1 % | |
| 4 | bore alpha : 1,92 g | 100 | 30°C/mn | vide | 400 | 1880°C (2153°K) | 30 | bore rhomboéd. beta | 4,5% | + de 99% B |
| 5 | $B_{12}O_2$ poudre , 270 mesh (bore amorphe : 4 g + ZnO : 5,02 g) | 240 | 25°C/mn | vide | 400 | 1990°C (2263°K) | 15 | $B_{12}O_2$ | 0,4% | |
| 6 | bore amorphe : 3,91 g $B_2O_3$ : 2,5 g | 286 | 55°C/mn | vide | 400 | 1850°C (2123°K) | 30 | $B_{12}O_2$ | 3 % | 75,2 % B 18,6 % O |
| 7 | $B_4C$ : 3,36 g bore amorphe : 0,67 g | 80 | 20°C/mn | argon | 400 | 2100°C (2373°K) | 30 | $B_4C$ | 0 % | 77,8 % B 21,0 % C |
| 8 | $B_4C$ : 3,10 g bore amorphe : 3,04 g | 80 | 20°C/mn | argon | 400 | 2100°C (2373°K) | 60 | $B_{13}C_2$ | 0 % | 84,9 % B 14,65% C |
| 9 | $B_4C$ : 1,93 g bore amorphe : 2,81 g | 80 | 20°C/mn | argon | 325 | 2000°C (2273°K) | 60 | $B_9C$ | 7,8% | |
| 10 | $B_4C$ : 1,31 g bore amorphe : 3,08 g | 80 | 20°C/mn | argon | 325 | 1800°C (2073°K) | 30 | B + $B_{10,5}C$ | 9,0% | 88,5 % B 7,9 % C |
| 11 | $B_4C$ , 600 mesh : 4,66 g $B_{12}O_2$ (comme à l'exemple 5) : 2,48 g | 200 | 20°C/mn | vide | 400 | 1900°C (2173°K) | 30 | phase rhomboédrique | non mesurée | |

REVENDICATIONS

1. Procédé de frittage à chaud sous pression de pièces riches en bore, à partir d'une poudre de matière du groupe constitué par le bore, les carbures de bore $B_nC$ (n allant de 4 à 10,5), le sous-oxyde de bore $B_6O$, leurs mélanges en toutes proportions, selon lequel on comprime ladite poudre sous pression en la chauffant à une température pouvant atteindre 2200°C, à l'intérieur d'une chambre tubulaire en graphite contenant deux pistons opposés en graphite avec du nitrure de bore d'une épaisseur de 1 mm au moins placé entre les faces de la chambre et celles des pistons et la matière en poudre à fritter, caractérisé en ce qu'on procède à la réalisation d'une enveloppe protectrice compacte étanche en nitrure de bore couvrant en totalité lesdites faces de la chambre et des pistons, la matière en poudre à fritter étant placée à l'intérieur de cette enveloppe.

2. Procédé selon la revendication 1 caractérisé en ce qu'on réalise l'enveloppe protectrice en faisant un dépôt de nitrure de bore sur les faces en graphite selon l'une quelconque des méthodes suivantes : dépôt chimique en phase vapeur, projection au plasma, pulvérisation cathodique, dépôt ionique.

3. Procédé selon la revendication 1 caractérisé en ce qu'on réalise l'enveloppe protectrice à partir de poudre de nitrure de bore que l'on comprime à chaud entre un noyau et les faces en graphite de la chambre tubulaire et des pistons.

4. Procédé selon la revendication 3 caractérisé en ce qu'on comprime la poudre de nitrure de bore à une pression de 200 bars environ à une température de 2100°C environ pendant une durée de 10 mn.

5. Procédé selon la revendication 1 caractérisé en ce que la matière en poudre à fritter est enfermée totalement dans un emballage en feuille de tantale et cet emballage est placé dans l'enveloppe protectrice constituée par de la poudre de nitrure de bore entourant totalement ledit emballage.

6. Procédé selon l'une quelconque des revendications 2, 3 caractérisé en ce que, en plus de l'enveloppe protectrice compacte et étanche réalisée en nitrure de bore sur les faces en graphite, on interpose de la poudre de nitrure de bore entre les pistons et la poudre à fritter.

7. Procédé selon l'une quelconque des revendications 1 à 6 pour la fabrication d'une pièce en sous-oxyde de bore $B_6O$ à partir d'un mélange dosé de bore et d'anhydride borique $B_2O_3$, caractérisé en ce qu'on maintient la pression à une valeur de 300 à 400 bars pendant 20 à 60 mn à une température comprise entre 1850°C et 2000°C.

8. Procédé selon l'une quelconque des revendications 1 à 6 pour la fabrication d'une pièce en carbure de bore $B_nC$, n étant supérieur à 4, à partir d'un mélange dosé de bore et de carbone, ou de carbure de bore $B_4C$, ou de poudre préalliée ayant la composition désirée, caractérisé en ce qu'on maintient la pression à une valeur de 300 à 400 bars pendant 30 à 60 mn à une température comprise entre 2000 et 2100°C.

9. Procédé selon l'une quelconque des revendications 1 à 6 pour la fabrication d'une pièce en bore pur à partir de poudre de bore pur amorphe, rhomboédrique alpha ou bêta, caractérisé en ce qu'on comprime cette poudre à une pression de 300 à 400 bars pendant 20 à 60 mn à une température comprise entre 1700 et 1900°C.

10. Procédé selon l'une quelconque des revendications 1 à 6 pour la fabrication d'une pièce en sous-oxyde de bore $B_6O$, ce sous-oxyde étant obtenu sous forme de poudre à partir d'un mélange de bore en poudre et d'un oxyde métallique en poudre $M_xO_y$, le rapport bore/oxygène contenu dans l'oxyde étant égal à 6 en valeur atomique, caractérisé en ce qu'on comprime la poudre de sous-oxyde de bore à une pression de 300 à 400 bars pendant 20 à 60 mn à une température comprise entre 1700 et 2000°C.

11. Procédé selon la revendication 10 caractérisé en ce qu'on prépare la poudre de sous-oxyde de bore à partir d'un mélange de bore en poudre et d'un oxyde de l'un des métaux suivants : Mg, Sn, Ga, Cd que l'on chauffe sous une atmosphère d'argon à une température de 1200 à 1600°C pendant

une durée de 2 h à 12 h.

12. Procédé selon l'une quelconque des revendications 1 à 6 caractérisé en ce qu'on place avec la poudre à fritter un noyau ayant une surface en nitrure de bore pour obtenir une pièce riche en bore à partie creuse ou évidée.

13. Dispositif pour la mise en oeuvre du procédé selon l'une quelconque des revendications 1 à 12 comprenant une chambre tubulaire (7) en graphite, deux pistons (3, 4) de compression en graphite, une enveloppe protectrice en nitrure de bore d'une épaisseur de 1 mm au moins, caractérisé en ce que la totalité des faces actives de la chambre tubulaire (7) et des pistons (3, 4) est revêtue d'une couche étanche de nitrure de bore (13).

14. Dispositif selon la revendication 13 caractérisé en ce que la couche adhérente de nitrure de bore est un dépôt réalisé par l'une des méthodes suivantes : dépôt chimique en phase vapeur, projection au plasma, pulvérisation cathodique, dépôt ionique, compression à chaud.

15. Pièce riche en bore en poudre frittée constituée par un matériau du groupe bore, carbure de bore $B_nC$ (n étant supérieur à 4), sous-oxyde de bore, les mélanges de ces corps en toutes proportions, caractérisée en ce qu'elle a une porosité comprise entre 40 et 0 %.

16. Pièce selon la revendication 15 caractérisée en ce qu'elle est constituée par un composite d'une part de bore, d'autre part de carbure de bore $B_{10,5}C$ ou de sous--oxyde de bore $B_6O$, dans la proportion de 1 à 0 partie de bore pour 0 à 1 partie de carbure de bore ou de sous-oxyde de bore, avec une porosité comprise entre 40 et 0 %.

0058618

1/1

Fig:1

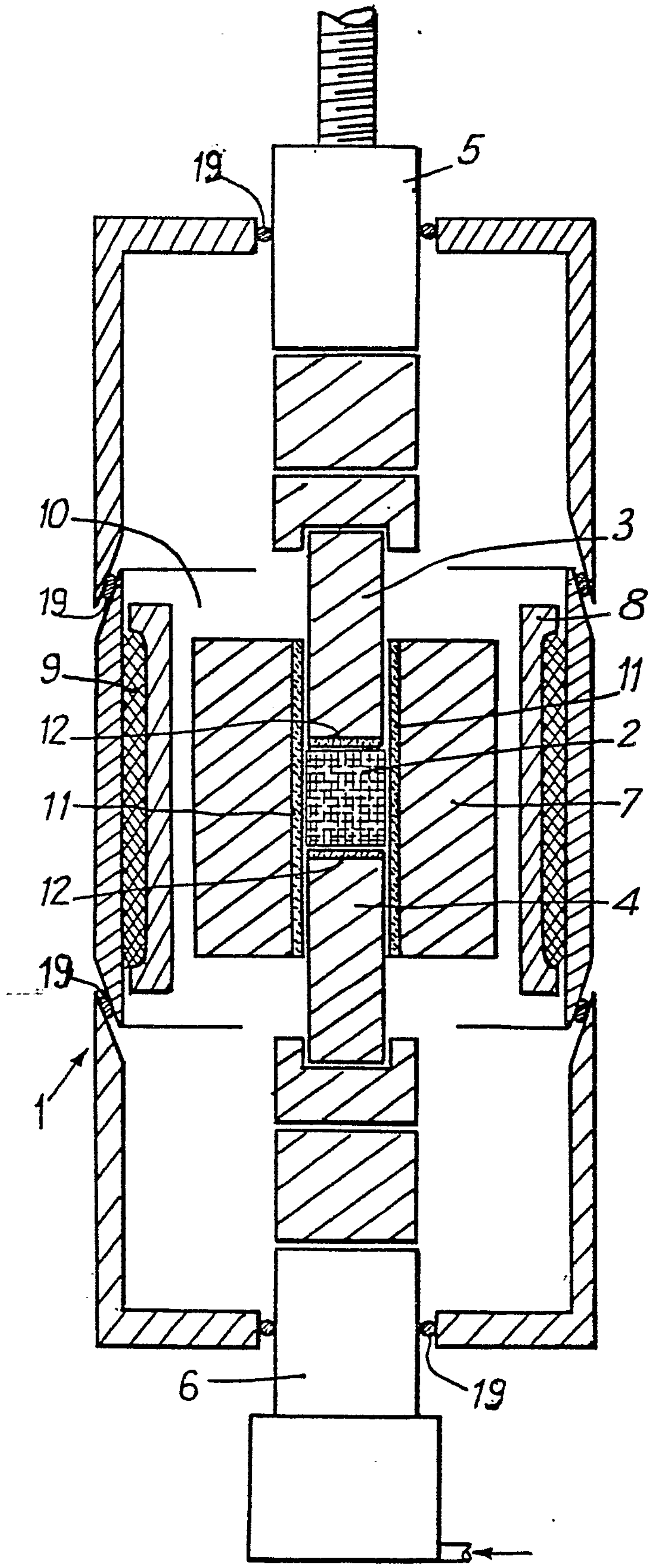


Fig:2

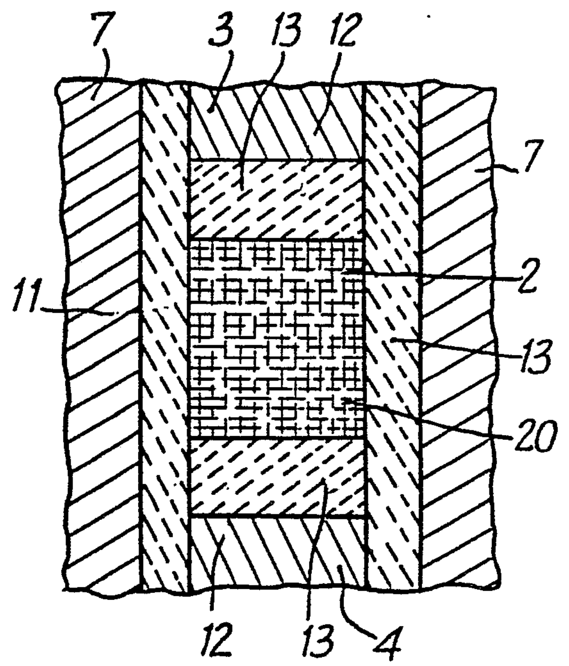


Fig:3

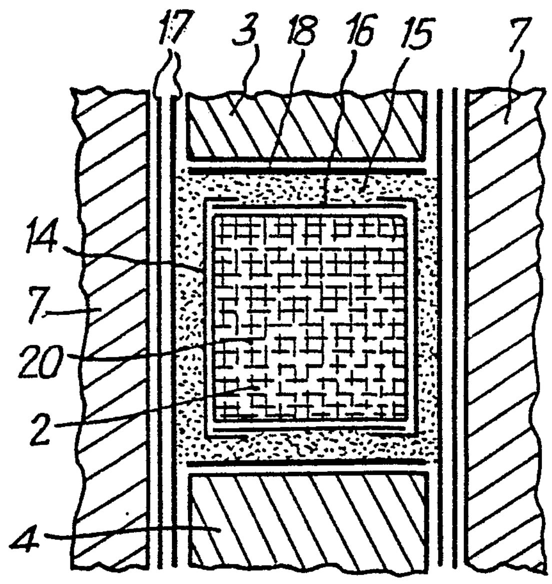

Office européen des brevets

# RAPPORT DE RECHERCHE EUROPEENNE

0058618

Numéro de la demande

EP 82 40 0253

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl. 3) |
| D,X Y | JOURNAL OF THE AMERICAN CERAMIC SOCIETY, vol.62, no.3/4, mars/avril 1979, Columbus, Ohio (US), B. CHAMPAGNE et al.:"Mechanical Properties of Hot-Pressed B-B4C Materials", pages 149-153 * en entier * --- | 1,2,8, 9,13-16 | C 04 B 35/64 C 04 B 35/00 C 04 B 35/56 C 01 B 35/10 |
| D,Y | US-A-3 816 586 (B.F. GOOSEY) * revendications 1-3 * --- | 1,5-7, 13,15 | |
| Y | THE AMERICAN CERAMIC SOCIETY BULLETIN, vol.53, no.8, août 1974, Columbus, Ohio (US), D.R. PETRAK et al.:"Mechanical Properties of Hot-Pressed Boron Suboxide and Boron", pages 569-573 * en entier * --- | 7,9,10 ,15,16 | DOMAINES TECHNIQUES RECHERCHES (Int. Cl. 3) |
| Y | US-A-3 660 031 (C.E. HOLCOMBE) * revendication 1; colonne 1, lignes 15-34 * --- | 10,11 | C 04 B 35/64 C 04 B 35/00 C 04 B 35/56 C 01 B 35/10 |
| A | US-A-3 717 694 (THE CARBORUMDUM) * revendications 1,4,6,7; colonne 4, exemple 1; figures 1-4 * --- | 1,12 | |
| | ./. | | |

Le présent rapport de recherche a été établi pour toutes les revendications

| Lieu de la recherche | Date d'achèvement de la recherche | Examinateur |
|---|---|---|
| LA HAYE | 28-05-1982 | SCHURMANS H.D.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503.03.82

0058618

Office européen des brevets

# RAPPORT DE RECHERCHE EUROPEENNE

Numéro de la demande

EP 82 40 0253

Page 2

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl. 3) |
| A | GB-A-1 415 482 (THE CARBORUMDUM)<br>* revendications 1,2,9-13 *<br>--- | 1,2,8, 14,15 | |
| A | FR-A-2 179 462 (J. LUCAS LTD.)<br>----- | | |
| | | | DOMAINES TECHNIQUES RECHERCHES (Int. Cl. 3) |

Le présent rapport de recherche a été établi pour toutes les revendications

| Lieu de la recherche | Date d'achèvement de la recherche | Examinateur |
|---|---|---|
| LA HAYE | 28-05-1982 | SCHURMANS H.D.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503.03.82